# EUROPÄISCHE PATENTSCHRIFT

(11) **EP 1 046 838 B1**
(45) Veröffentlichungstag und Bekanntmachung des Hinweises auf die Patenterteilung: **01.12.2004**
(21) Anmeldenummer: 00108323.7
(22) Anmeldetag: 15.04.2000
(51) Int. Cl.: F16H 37/04, F03D 11/02

(54) **Getriebe für Windgeneratoren**
Transmission for wind turbines
Transmission pour éoliennes

(30) Priorität: 19.04.1999 DE 19917605
(43) Veröffentlichungstag der Anmeldung: 25.10.2000
(73) Patentinhaber: RENK AKTIENGESELLSCHAFT, 86159 Augsburg (DE)
(72) Erfinder: Hösle, Helmut, 86420 Diedorf (DE)
(74) Vertreter: Schober, Stefan, Dipl.-Ing.

(56) Entgegenhaltungen:
- WO-A-91/19916
- DE-A- 2 165 286
- DE-B- 1 104 458
- DE-C- 935 657
- FR-A- 1 601 670
- GB-A- 847 989
- US-A- 2 014 138
- US-A- 2 913 064
- US-A- 3 839 922
- US-A- 3 972 106
- US-A- 4 757 211
- US-A- 4 871 923
- US-A- 4 894 501
- US-A- 5 041 167
- US-A- 5 383 979
- US-A- 5 663 600
- THORNBLAD P: "GEARS FOR WIND POWER PLANTS" INTERNATIONAL SYMPOSIUM ON WIND ENERGY SYSTEMS, XX, XX, 1978, Seiten C689-C6106, XP002133564
- PATENT ABSTRACTS OF JAPAN Bd. 010, Nr. 004 09 Januar 1986 & JP 60 165 369 A (TOYOTA JIDOSHA KK) 28 August 1985
- DATABASE WPI Week 199407, Derwent Publications Ltd., London, GB; Class M13, AN 1994-055583 & SU 1 788 080 A1 (CHERNYSHOV I I) 15 Januar 1993
- PATENT ABSTRACTS OF JAPAN Bd. 017, Nr. 252 (M-1412) 15 Mai 1993 & JP 04 370 443 A (SUMITOMO HEAVY IND LTD) 22 Dezember 1992

## Beschreibung

Die Erfindung betrifft ein Getriebe zum Antrieb von Generatoren durch Rotoren von Windanlagen, das als Aufsteckgetriebe ausgeführt ist.

### [Stand der Technik]

Die Erfindung geht von einem Aufsteckgetriebe aus, das durch einen Preßverband mit der Rotorwelle einer Windanlage verbunden ist, mit der die Windkraft in das Getriebe eingeleitet wird. Bei dieser bekannten Ausführungsart ist die Nabe des Preßverbandes mit einem Planetenträger verbunden oder ein Teil von diesem und durch Lager im Getriebegehäuse geführt. Die Planetenräder des umlaufenden Planetenträgers wälzen sich auf einem gehäusefesten Hohlrad ab und kämmen gleichzeitig mit einem Sonnenrad durch das die Leistung summiert wird.

Von der Sonnenradwelle dieser ersten Stufe wird die Leistung in den Planetenträger einer zweiten Planetenstufe weitergeführt. Dieser umlaufende Planetenträger führt die auf ihm angeordneten Planetenräder in einem weiteren gehäusefesten Hohlrad und die Planetenräder treiben in ein Sonnenrad ab.

Von dort wird die Leistung über ein einstufiges Stirnradgetriebe durch dessen Ritzelwelle in einen Generator abgetrieben.

Diese Getriebeanordnungen sind komplex aufgebaut, weisen große Baulängen auf, sind aufwendig zu montieren und zu warten.

Ein derartiges Getriebe wird in der WO-A-91 19916 beschrieben.

Die DE-B 1 104 458 offenbart ein getriebe für windkraftanlagen gemäß dem Oberbegriff des Anspruches 1 und betrifft eine Leistungsregeleinrichtung für Windkraftanlagen. Das Windrad ist mit seiner Welle im Getriebegehäuse gelagert und treibt über ein - auf der Welle angeordnetes - Hohlrad in eine erste Planetengetriebestufe ein. Die Planetenräder der ersten Planetengetriebestufe sind auf gemeinsamen Wellen mit weiteren Planetenrädern einer zweiten Planetengetriebestufe angeordnet, welche über ein Sonnenrad abtreibt. Das Sonnenrad ist mit einem ersten Zahnrad verbunden, welches über ein Ritzel den Generator antreibt. Zum Schutz vor Überlastung ist zwischen dem Sonnenrad und dem ersten Stirnrad eine Rutschkupplung angeordnet. Weiterhin ist eine verstellbare Windfahne vorgesehen, mit welcher das Windrad in oder aus dem Wind gedreht werden kann.

### [Aufgabe der Erfindung]

Davon ausgehend ist es die Aufgabe der Erfindung einen kompakteren Antrieb mit hoher Übersetzung darzustellen, der eine einfache Montage und Wartung zuläßt.

Diese Aufgabe wird erfindungsgemäß durch die kennzeichnenden Merkmale des Patentanpruchs 1 gelöst.

Durch die vorteilhafte erfindungsgemäße Lageranordnung tritt ein günstiger direkter Kraftfluß auf.

Durch die erfindungsgemäße Leistungsverzweigung werden die Tragfähigkeiten der Hohlradzähne und die des Sonnenrades optimal ausgenutzt.

Die Erfindung läßt eine einfache Montage der Gesamtanordnung und eine Überwachung der einfach zugänglichen Lager der Planetenräder zu.

Die erfindungsgemäße Anordnung der Sonnenradwelle, läßt das Ziehen des Sonnenrades zu.

Bei erfindungsgemäßen Getrieben laufen nur geringe Massen um die Zentralachse, wodurch ein besserer Wirkungsgrad und eine einfache Überwachung ermöglicht wird.

### [Beispiele]

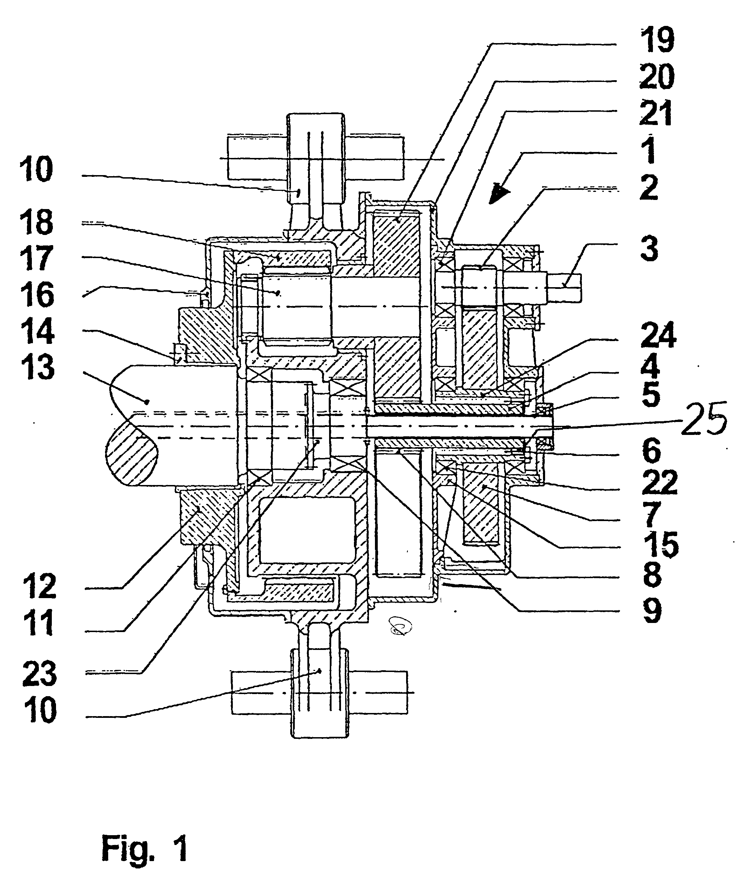

Nachfolgend wird die Erfindung anhand der Fig. 1 näher erläutert.

Als abgebrochene Darstellung ist die Rotorwelle (13) gezeigt, die an ihrem nicht dargestellten Ende ein Windrad bzw. Windflügel oder ähnliches trägt. Dieses Wellenende ist durch ein Lager am Turm der Anlage befestigt. An ihrem getriebeseitigen Ende ist die Rotorwelle (13) an einem - sie verlängernden - Fortsatz (23) im Gehäuse (16) gelagert. Dieser Fortsatz (23) kann als eigenes Bauteil angeflanscht werden, als Absatz an die Rotorwelle angedreht sein oder auch als komplette - aus dem Hohlradträger (12) und dem Fortsatz (23) - bestehende Baueinheit auf das Wellenende gebaut sein, wobei diese Baueinheit selbst auch einteilig sein kann. Die Rotorwelle (13) ist, für die Aufnahme von Steuereinrichtungen zur Beeinflussung der Windflügel, hohlgebohrt. Auch der Fortsatz (23) weist deshalb einen Durchlaß auf, der mit einem Rohr (5) durch das Flanschgehäuse (20) geführt wird und auf der vom Windrad abgewendeten Seite des Gehäuses (20) die Montage von weiteren Steuereinrichtungen zuläßt.

Auf dem abtreibenden Ende der Rotorwelle (13) also im endnahen Bereich aber vor dem Fortsatz (23) ist der Hohlradträger (12) angeordnet. Diese Verbindung zur Rotorwelle (13) ist als Schrumpfverband mittels einer Schrumpfscheibe (14) ausgeführt. Weitere Ausgestaltungsvarianten sehen einen Preßsitz oder einen Formschluß durch eine Keilwellenverbindung vor.

Andere Wellen-Naben-Verbindung sind jedoch auch möglich.

Der Hohlradträger (12) nimmt das Hohlrad (18) auf, das die Kraft von der Rotorwelle (13) in ein bzw. mehrere Planetenräder (17) eintreibt. Auf deren im Gehäuse (16) drehbar gelagerten Wellen sind axial versetzt jeweils ein weiteres Planetenrad (19) angeordnet, das mit dem Sonnenrad (8) kämmt. Vom fliegend zwischen mehreren Planetenrädern zentrierten Sonnenrad (8) wird die Kraft über die hohlgebohrte Sonnenradwelle (4) durch eine Kupplung, vorzugsweise eine Zahnkupplung, zu einer Nabe (24) geführt, in deren Innenraum die Sonnenradwelle (4) aufgenommen ist.

Ohne konstruktiven Mehraufwand lassen sich die Planetengetriebestufen (18, 17, 19, 8) mit Schrägverzahnungen ausführen, wobei sich die Axialkräfte der Planetenräder (17, 19) ausgleichen und die Vorteile wie ruhigere Laufeigenschaften oder höhere Tragfähigkeit von Schrägverzahnungen nutzbar sind.

Durch eine elastische axiale Befestigung der Sonnenradwelle (4) können Antriebsschwankungen, die auf ungleichmäßigen Windverhältnissen oder sonstigen Einflüssen beruhen, gemildert oder kompensiert werden.

Weiterhin ist es durch Mesung der auftretenden Axialkräfte möglich, Aussagen über die aktuellen Betriebsdaten der Anlage, wie Drehmoment, Leistung usw. zu erhalten. Mit Kenntnis dieser Daten kann dann entsprechend regelnd bzw. steuernd in den Betriebsablauf eingegriffen werden - z. B. Abschaltung bei Überlast und Gefahr der Zerstörung des Getriebes. Dazu ist vorzugsweise an der axial fest gelagerten Nabe (24) ein Sensor (25) angebracht, der die Kraft aufnimmt mit der die - axial elastisch an der Nabe (24) befestigte - Sonnenradwelle (4) auf die Nabe (24) drückt. Als Sensor (25) ist dafür z. B. eine Kraftmeßdose (auf piezoelektrischen, induktiven o. ä. Prinzipien beruhend) geeignet oder ein Wegaufnehmer, der die Relativbewegungen zwischen der Sonnenradwelle (4) und der Nabe (24) aufnimmt und mittelbar, über die Federkonstante des elastischen Verbindungsgliedes, Aufschluß über die auftretende Kraft gibt.

Die Nabe (24) trägt ein Stirnrad (7), das mit einem Ritzel (2), das vorzugsweise direkt auf die Abtriebswelle (3) angefräst ist, kämmt. Von der Abtriebswelle (3) wird die Antriebsleistung in den Generator geleitet.

Die Lagerung des getriebeseitigen Endes der Rotorwelle (13) erfolgt mit einem Lager (9), das sich im Planetenträger abstützt, der mit dem Gehäuse (16) eine Einheit bildet. Das Lager (9) liegt nahezu in der Flucht der Drehmomentstützen (10), die das Reaktionsmoment des Gehäuses (16) abfangen und in den Turm der Anlage einleiten. Somit werden alle auftretenden Kräfte bzw. Momente durch direkte Kraftleitung in das einteilige Gehäuse (16) geführt, und es treten keine aufwendigen Fügestellen auf, über die die Kraft geführt werden muß.

Das Kippmoment des Getriebes wird über ein Lager (11) gegen die Rotorwelle (13) abgestützt. Im dargestellten Ausführungsbeispiel ist dieses Lager (11) innerhalb des Planetenträgers angeordnet, in weiteren Konstruktionsvarianten kann dieses Lager aber auch an die Durchtrittsöffnung für den Hohlradträger (12) durch die Wand des Gehäuses (16) verlegt werden. In diesen Ausführungsbeispielen wird das Gehäuse (16) dann mittelbar über den Hohlradträger (12) auf der Rotorwelle (13) abgestützt.

Das Hohlrad (18) kann sowohl mit einer Kombination aus kraftmit formschlüssigen Elementen mit dem Hohlradträger (12) verbunden werden als auch rein formschlüssig. Dazu werden Schraubenverbindungen hergestellt, die durch Zylinderstifte verstärkt werden oder es wird eine axial gesicherte Zahnkupplung eingesetzt.

Die Planetenradwellen sind auf beiden Seiten des ersten Planetenrades (17) im - mit dem Gehäuse (16) eine integrative Einheit bildenden - Planetenträger gelagert. Auf dem, in das Flanschgehäuse (20) hineinragende, freien Wellenende ist jeweils ein zweites Planetenrad (19) angebracht.

Das Flanschgehäuse (20) ist an das Gehäuse (16) angeflanscht und umschließt auf seiner offenen Seite die zweite Planetengetriebestufe (19, 8). Auf seiner geschlossenen Seite nimmt es die Stirnradstufe (7, 2) auf. Die Nabe (24) ist auf beiden Seiten des Stirnrades (7) gelagert. Zum einen in der Außenwandung des Flanschgehäuses (20) und zum anderen in einem Lager (22), das in den aufgesetzten Lagerdeckel (15) eingebracht ist, der auch das zur Planetenstufe (19, 8) hingerichtete Lager (21) der Abtriebswelle (3) trägt. Die Abtriebswelle (3) ist in einem weiteren Lager in der Außenwand des Flanschgehäuses (20) abgestützt. Durch den Einsatz des Lagerdeckels (15) kann beim Flanschgehäuse (20) auf eine horizontale Teilung, die ein Abdichtungsproblem mit sich brächte, verzichtet werden.

Das Aufsteckgetriebe (1) läßt sich je nach Ausführungsvariante entweder als komplett vormontierte Einheit auf die Rotorwelle (13) anbauen oder in Stufen montieren.

Für Wartungszwecke läßt sich nach Demontage eines Gehäusedekkels auf der geschlossenen Seite des Flanschgehäuses (20) das Sonnenrad (8) mitsamt der Sonnenradwelle (4) aus dem Getriebe herausziehen.

Weiterhin ist es möglich die Funktion, der leicht zugänglichen Lager der nicht umlaufenden Planetenradwellen z. B. über Körperschallmessungen zu überwachen.

Durch die vorteilhafte Krafteinleitung über ein Hohlrad (18) in die erste Planetengetriebestufe (18, 17), die ohne ein - die Belastbarkeit begrenzendes - Sonnenrad auskommt, ergeben sich günstige Voraussetzungen für die Auslegung, so daß sehr kompakt gebaut werden kann. Die somit nach außen verlagerte Belastungsgrenze und die dadurch optimale Ausnutzung der Werkstoffkennwerte kann durch Einsatzhärten der Zähne des Hohlrades weiter erhöht werden. Bei gleichbleibender Leistungsübertragung und gleicher Übersetzung, ist es durch diese besonders vorteilhafte Maßnahme möglich, die Zahnbreite schmaler auszulegen oder den Durchmesser des Hohlrades (18) zu verkleinern. Dadurch kann das Bauvolumen und das Gewicht des Getriebes weiter verringert werden oder bei gleichen Abmessungen der Bauteile kann mit dem gleichen Getriebe eine größere Leistung übertragen werden.

Zur Erhöhung der Belastbarkeitsgrenze der Hohlradzähne können auch andere Verfahren der Oberflächenhärtung, wie beispielsweise Induktionshärten, Flammhärten oder kombinierte Verfahren wie das Carbonitrieren bzw. Nitrocarborieren, angewendet werden.

### [Bezugszeichenliste]

- 1: Aufsteckgetriebe
- 2: Ritzel
- 3: Abtriebswelle
- 4: Sonnenradwelle
- 5: Rohr
- 6: Kupplung
- 7: Stirnrad
- 8: Sonnenrad
- 9: Lager
- 10: Drehmomentstütze
- 11: Lager
- 12: Hohlradträger
- 13: Rotorwelle
- 14: Schrumpfscheibe
- 15: Lagerdeckel
- 16: Gehäuse
- 17: Planetenrad
- 18: Hohlrad
- 19: Planetenrad
- 20: Flanschgehäuse
- 21: Lager
- 22: Lager
- 23: Fortsatz
- 24: Nabe
- 25: Sensor

## Patentansprüche

1. Getriebe für Windanlagen mit einer mehrstufigen Planetengetriebeanordnung und einer Stirnradstufe zum Abtrieb in einen Generator, wobei der Krafteintrieb in die Planetengetriebeanordnung (18, 17, 19, 8) über ein Hohlrad (18) erfolgt, das auf mindestens ein Planetenrad (17) treibt, auf dessen gehäusefester Welle jeweils ein weiteres Planetenrad (19) angeordnet ist, das mit einem Sonnenrad (8) kämmt von dem der Abtrieb in die Stirnradstufe (7, 2) erfolgt **dadurch gekennzeichnet, dass** die Zähne des Hohlrades (18) oberflächengehärtet sind.

2. Getriebe nach Anspruch 1, **dadurch gekennzeichnet, dass** das Hohlrad (18) auf einem einteiligen oder einem aus mehreren Teilen zusammengebauten Hohlradträger (12) angeordnet ist.

3. Getriebe nach Anspruch 2, **dadurch gekennzeichnet, dass** die Verbindung zwischen dem Hohlrad (18) und dem Hohlradträger (12) formschlüssig ist, beispielsweise durch eine Zahnkupplung hergestellt wird.

4. Getriebe nach Anspruch 2, **dadurch gekennzeichnet, dass** die Verbindung zwischen dem Hohlrad (18) und dem Hohlradträger (12) kraft- und formschlüssig ist, die Verbindung z.B. durch Schrauben und Stifte hergestellt wird.

5. Getriebe nach Anspruch 1, **dadurch gekennzeichnet, dass** die - auf der zur Planetengetriebestufe hingerichteten Seite angeordneten - Lager (21, 22) der Stirnradstufe (7, 2) in einem Lagerdeckel (15), der im Gehäuseinnenraum des Flanschgehäuses (20) befestigt ist, aufgenommen sind.

6. Getriebe nach Anspruch 1, **dadurch gekennzeichnet, dass** die Verzahnungen der Planetengetriebestufen (18, 17, 19, 8) schrägverzahnt sind.

7. Getriebe nach Anspruch 1, **dadurch gekennzeichnet, dass** das Sonnenrad (8) in Axialrichtung beweglich angebunden ist.

8. Getriebe nach Anspruch 1 oder 7, **dadurch gekennzeichnet, dass** ein Sensor (25) vorgesehen ist, der die Axialkraft der Sonnenradwelle (4) aufnimmt.

9. Getriebe nach einem der Ansprüche 1 bis 8, **gekennzeichnet durch** die Verwendung als Aufsteckgetriebe auf eine Rotorwelle (13) einer Windanlage, bei dem das getriebenahe Ende der Rotorwelle (13) **durch** ein Lager (9) gestützt wird und das aus den Getriebekräften resultierende Kippmoment des Getriebes (1) von einem Lager (11) des Getriebes (1) gegen die Rotorwelle (13) abgestützt wird.

10. Getriebe nach Anspruch 2 bis 4 und 9, **dadurch gekennzeichnet, dass** der Hohlradträger (12) über seine Nabe mit der Rotorwelle (13) verbunden ist.

11. Getriebe nach Anspruch 10, **dadurch gekennzeichnet, dass** die Wellen-Naben-Verbindung zwischen Hohlradträger (12) und Rotorwelle (13) kraftschlüssig ist, z.B. ein Preßsitz oder ein Schrumpfverband ist.

12. Getriebe nach Anspruch 10, **dadurch gekennzeichnet, dass** die Wellen-Naben-Verbindung zwischen Hohlradträger (12) und Rotorwelle (13) formschlüssig ist, z.B. eine Keilwellenverbindung ist.

## Claims

1. Transmission for wind installations having a multistage planetary-gearing arrangement and a spur-wheel stage for power take-off to a generator, with the force being driven into the planetary-gearing arrangement (18, 17, 19, 8) by way of a hollow wheel (18) which drives onto at least one planet wheel (17) on whose shaft that is fixed with respect to a housing a further respective planet wheel (19) is arranged that mates with a sun wheel (8) from which the power take-off to the spur-wheel stage (7, 2) is effected, **characterised in that** the teeth of the hollow wheel (18) are surface-hardened.

2. Transmission according to claim 1, **characterised in that** the hollow wheel (18) is arranged on a one-part hollow-wheel carrier (12) or a hollow-wheel carrier (12) that is assembled from a plurality of parts.

3. Transmission according to claim 2, **characterised in that** the connection between the hollow wheel (18) and the hollow-wheel carrier (12) is form-locking, produced, for example, by means of a toothed coupling.

4. Transmission according to claim 2, **characterised in that** the connection between the hollow wheel (18) and the hollow-wheel carrier (12) is force-locking and form-locking, the connection being produced, for example, by means of screws and pins.

5. Transmission according to claim 1, **characterised in that** the bearings (21, 22) of the spur-wheel stage (7, 2) - arranged on the side directed towards the planetary-gearing stage - are received in a bearing cover (15) that is secured in the interior housing space of the flange housing (20).

6. Transmission according to claim 1, **characterised in that** the gear-tooth constructions of the planetary-gearing stages (18, 17, 19, 8) have helical toothing.

7. Transmission according to claim 1, **characterised in that** the sun wheel (8) is movably connected in the axial direction.

8. Transmission according to claim 1 or 7, **characterised in that** a sensor (25) is provided that picks up the axial force of the sun-wheel shaft (4).

9. Transmission according to one of claims 1 to 8, **characterised by** use as a slip-on transmission on a rotor shaft (13) of a wind installation where the end of the rotor shaft (13) that is close to the transmission is stayed by a bearing (9), and the tilting moment of the transmission (1) resulting from the transmission forces is supported by a bearing (11) of the transmission (1) against the rotor shaft (13).

10. Transmission according to claims 2 to 4 and 9, **characterised in that** the hollow-wheel carrier (12) is connected to the rotor shaft (13) by way of its hub.

11. Transmission according to claim 10, **characterised in that** the shaft-hub connection between the hollow-wheel carrier (12) and the rotor shaft (13) is force-locking, being a press-fit or a shrink joint, for example.

12. Transmission according to claim 10, **characterised in that** the shaft-hub connection between the hollow-wheel carrier (12) and the rotor shaft (13) is form-locking, being a spline-shaft connection, for example.

## Revendications

1. Transmission pour éoliennes avec un dispositif de transmission planétaire à plusieurs étages et un étage de roue droite pour la sortie vers un générateur, l'entrée des forces dans le dispositif de transmission planétaire (18, 17, 19, 8) s'effectuant par une roue creuse (18), qui supporte au moins une roue planétaire (17), dont l'arbre solidaire du carter porte au moins une autre roue planétaire (19) qui engrène avec une roue solaire (8) qui produit la sortie dans l'étage de roue droite (7, 2),
**caractérisée en ce que**
les dents de la roue creuse (18) sont durcies en surface.

2. Transmission selon la revendication 1,
**caractérisée en ce que**
la roue creuse (18) est disposée sur un support de roue creuse (12) d'un seul tenant ou composé de plusieurs parties.

3. Transmission selon la revendication 2,
**caractérisée en ce que**
la liaison entre la roue creuse (18) et le support de roue creuse (12) est réalisée par complémentarité de forme, par exemple par un couplage à dents.

4. Transmission selon la revendication 2,
**caractérisée en ce que**
la liaison entre la roue creuse (18) et le support de roue creuse (12) est réalisée par complémentarité de force et de forme, la liaison est par exemple réalisée par des vis et des broches.

5. Entraînement selon la revendication 1,
**caractérisé en ce que**
les paliers (21, 22) de l'étage de roue droite (7, 2) - disposés sur le côté orienté vers l'étage de transmission planétaire - sont installés dans un couvercle de palier (15), qui est fixé dans l'espace intérieur du carter à bride (20).

6. Transmission selon la revendication 1,
**caractérisée en ce que**
les dentures des étages de transmission planétaire (18, 17, 19, 8) sont hélicoïdales.

7. Transmission selon la revendication 1,
**caractérisée en ce que**
la roue solaire (8) est montée mobile en direction axiale.

8. Transmission selon la revendication 1 ou 7,
**caractérisée en ce qu'**
un capteur (25) saisit la force axiale de l'arbre de roue solaire (4).

9. Transmission selon l'une quelconque des revendications 1 à 8,
**caractérisée en ce qu'**
elle sert de réducteur à arbre creux sur un arbre de rotor (13) d'une éolienne, l'extrémité de l'arbre de rotor (13) proche de la transmission est supportée par un palier (9) et le couple de renversement de la transmission (1) résultant des forces de la transmission est supporté par un palier (11) de la transmission (1) par rapport à l'arbre de rotor (13).

10. Transmission selon la revendication 2 à 4 et 9,
**caractérisée en ce que**
le support de roue creuse (12) est relié par son moyeu à l'arbre de rotor (13).

11. Transmission selon la revendication 10,
**caractérisée en ce que**
la liaison arbre-moyeu entre le support de roue creuse (12) et l'arbre de rotor (13) est réalisée par serrage, par exemple par ajustage serré ou par frettage.

12. Transmission selon la revendication 10,
**caractérisée en ce que**
la liaison arbre-moyeu entre le support de roue creuse (12) et l'arbre de rotor (13) est réalisée par complémentarité de forme, par exemple par une liaison par arbre cannelé.
